# EUROPEAN PATENT APPLICATION

(11) **EP 4 764 443 A1**
(43) Date of publication of application: **24.06.2026**
(21) Application number: 24220672.0
(22) Date of filing: 17.12.2024
(51) Int. Cl.: G01M 11/00

(54) **AN OPTICAL PROBE AND RELATED METHODS**

(71) Applicant: Keystone Photonics GmbH, 76185 Karlsruhe (DE)
(72) Inventor: Dietrich, Philipp-Immanuel, 76744 Wörth (DE)
(74) Representative: Altmann Stößel Dick Patentanwälte PartG mbB

(57) **Abstract**

The present invention relates to optical coupling between optical components and, more particular, to an optical probe (1) configured for optical testing of at least one micro-optical component (50), to a method for producing an optical probe (1), and to a method for optical testing of at least one micro-optical component (50). The optical probe (1) is comprising:
- a probe head (10), wherein the probe head (10) comprises a test component (2);
- at least one micro-optical element (20), wherein the micro-optical element (20) is a separate element with regard to the test component (2) and in mechanical contact with the test component (2),
wherein the micro-optical element (20) is configured to optically couple at least one light beam (3) between the test component (2) and the micro-optical component (50), thereby being configured to determine an emission characteristics of a coupling location (52) comprised by the micro-optical component (50) , wherein the micro-optical component (50) further comprises a beam-shaping element (51a), wherein the beam-shaping element (51a) is arranged in a manner that at least a portion of the light beam (3) is travelling through the beam-shaping element (51a).

## Description

### Field of the invention

The present invention relates to optical coupling between optical components and, more particular, to an optical probe configured for optical testing of at least one micro-optical component, to a method for producing an optical probe, and to a method for optical testing of at least one micro-optical component.

In particular, the optical probe can be used for fabrication, calibration, testing, determining an emission characteristics of a coupling location and pre-selection of micro-optical components, which are particularly configured for optical communication, artificial intelligence, sensor applications, medical sensors, automotive applications, quantum applications, or environmental sensing; however, using the optical probe in other applications is also possible.

### Related art

Optical probes which are configured for optically coupling to photonic integrated circuits featuring 3D-printed optics on fiber arrays are known. Further known are 3D-printed optics for optical packaging. Still further known are 3D-printed freeform probes for beam shaping of light exiting photonic integrated circuits. Still further known are optical probes by using an index matching liquid between the optical probe and an integrated photonic circuit.

WO 2018/083191 A1 discloses a fabrication of micro-optics for beam expansion on photonic integrated circuits for optical packaging.

Trappen M. et al. "3D-printed optical probes for wafer-level testing of photonic integrated circuits," Optics Express 28, 37996-38007, 2020, discloses 3D-printed optics on fiber arrays for probing wafers by inserting a 3D-printed micro-optics consisting of a mirror and a lens into an etched trench into a wafer.

German patent application 102023213027.0, filed December 20, 2023, discloses an optical probe configured for optical testing of at least one micro-optical component and a method for its producing, wherein the optical probe comprises a probe head; a micro-optical element in mechanical connection with the probe head and configured to provide an optical coupling with the of at least one micro-optical component; and at least one sensor structure being a separate element with regard to the micro-optical element and configured to generate a sensor signal indicative of a positioning of the probe head relative to an object.

European patent application 23218488.7, filed December 20, 2023, discloses an optical probe configured for optical testing of at least one micro-optical component, a method for producing an optical probe, and to a method for optical testing of at least one micro-optical component. The optical probe is comprising: a probe head, wherein the probe head comprises a testing circuit; at least one micro-optical element, wherein the micro-optical element is a separate element with regard to the testing circuit and in mechanical contact with the testing circuit, wherein the micro-optical element is configured to optically couple light between the testing circuit and the micro-optical component, thereby being configured to determine an optical performance of the micro-optical component.

European patent application 24164535.7, filed March 19, 2024, discloses an optical probe configured for optical testing of at least one micro-optical component, a method for producing an optical probe, and to a method for optical testing of at least one micro-optical component. The optical probe is comprising: a probe head, wherein the probe head comprises a test component; at least one micro-optical element, wherein the micro-optical element is a separate element with regard to the test component and in mechanical contact with the test component, wherein the micro-optical element is configured to optically couple light between the test component and the micro-optical component, thereby being configured to determine an optical performance of the micro-optical component, and wherein the micro-optical element is configured to be operated in an index matching liquid.

### Problem to be solved

It is therefore an objective of the present invention to provide an optical probe configured for optical testing of at least one micro-optical component, a method for producing an optical probe, and a method for optical testing of at least one micro-optical component, which at least partially overcome problems of the state of the art.

It is particularly desirable that the optical probe may be configured to measure properties of light emitted by a micro-optical component that are indicative for a defective, misaligned and/or wrongly assembled beam-shaping element; particularly for any an optical element attached to and/or integrated into a micro-optical component in a step after generation of a waveguide at the micro-optical component; especially a facet-attached, a fiber-attached, or an etched micro-lens or mirror, a convex, a concave or a free-form lens or mirror, a diffractive grating, a gradient index lens, or a 3D-printed waveguiding optics. In contrast hereto, a grating coupler without an additional optical element, such as an optical lens is not considered as a beam-forming element as it is formed during the generation of the waveguide. The present invention is further not directed to test grating couplers since they are inherently aligned with the waveguide in a perfect manner.

Moreover, it is particularly desirable that the optical probe may be configured to test a coupling site designed for implementing or connecting to a detachable optical connector; especially a facet-attached or a chip-surface attached micro-lens, or a micro-lens micro-fabricated within a micro-optical component. It is particularly desirable to test micro-lenses etched into a surface or a rear side of an optical or electro-optical chip, in particular a silicon-photonic chip. Moreover, it is particularly desirable that coupling interfaces used for co-packaged optics can also be tested by the optical probe. It is, moreover, preferred that the optical probe has to apply a low number of measurements at different locations or angles. In particular, it is preferred that the optical probe does not require a scanning movement, or search light by applying a search algorithm, or perform an active alignment.

### Summary of the invention

This problem is solved by an optical probe configured for optical testing of at least one micro-optical component, a method for producing an optical probe, and a method for optical testing of at least one micro-optical component having the features of the independent claims. Preferred embodiments, which might be implemented in an isolated fashion or in any arbitrary combination, are listed in the dependent claims and throughout the following description.

In a first aspect, the present invention relates to an optical probe configured for optical testing of at least one micro-optical component. According to the present invention, the optical probe comprises
- a probe head, wherein the probe head comprises a test component;
- at least one micro-optical element, wherein the micro-optical element is a separate element with regard to the test component and in mechanical contact with the test component,
wherein the micro-optical element is configured to optically couple at least one light beam between the test component and the micro-optical component, thereby being configured to determine an emission characteristics of a coupling location comprised by the micro-optical component, wherein the micro-optical component further comprises a beam-shaping element, wherein the beam-shaping element is arranged in a manner that at least a portion of the light beam is travelling through the beam-shaping element.

As generally used, the term "optical probe" refers to an optical device, which is configured for optical testing of at least one micro-optical component. In addition, the optical probe may exhibit at least one of a mechanical functionality, an electrical functionality, or an optical functionality as described below in more detail. For a purpose of optical testing, the optical probe as used herein comprises a probe head having a test component, wherein the probe head may be aligned in a manner that light may couple between the test component and the micro-optical component. As further generally used, the term "probe head" refers to a terminal piece of the optical probe, wherein the terminal piece comprises a micro-optical element configured to optically couple light between the test component and the micro-optical component. In a particularly preferred embodiment, the probe head may be movable relative to the micro-optical component to be tested. For a purpose of being dynamically movable in an easy manner, the probe head may, preferably, exhibit a low weight.

As already indicated above, the optical probe is configured for the optical testing of at least one micro-optical component. As generally used, the term "micro-optical component" refers to a device under testing, wherein the device may, preferably, be or comprise a wafer having multiple photonic integrated circuits, or individual photonic integrated circuits. In general, then micro-optical component may comprise a plurality of optical structures that inherently assume small dimensions, preferably of 10 µm or less, more preferred of 5 µm or less, especially of 1 µm or less, configured to execute an intended function, in particular as a waveguide, or that has a total dimension 10 mm or less. In a preferred embodiment, the micro-optical component may be generated on a photonic platform, particularly selected from a SOI (Silicon on Insulator), InP (Indium Phosphide), SiN (Silicon Nitride), or TFLN (Thin Film Lithium Niobate). In an alternative embodiment, the micro-optical component may be a non-planar component, especially an optical element selected from a micro-lens, a grating, an optical isolator, or a mirror.

As already further indicated above, the optical probe comprises a probe head having a test component. As generally used, the term "test component" refers to an optical component which is configured for transmitting or collecting light from a device under testing, in particular the micro-optical component as described elsewhere herein. The test component may, preferably, be selected from a fiber, a fiber array, a waveguide, a photonic integrated circuit, a planar transparent substrate, a curved transparent substrate, or an optical element, in particular an optical lens or an objective lens. The test component may be a testing circuit. The testing circuit may, preferably, comprise the same material, fabrication batch, wafer or technology as the micro-optical element. However, using a different type of testing circuit may also be feasible. For a purpose of optical testing of the at least one micro-optical component, the testing circuit may have active optical structures, especially be selected from at least one of a light source, such as a laser or a superluminescent light emitting diode (SLED), or a detector, such as a Ge photodiode, or it may be coupled to an optical fiber or to a fiber array, particularly to be observable by a macroscopic optical instrument. As generally used, the term "optical fiber" refers to an extended, round optical element which is configured for guiding light by using a facet, wherein the term "facet" refers to a terminal surface of a light guiding structure, especially of a waveguide, through which light is transmitted or received. As further generally used, the term "fiber array" refers to at least one optical fiber which is in connection with at least one mechanical element, preferably selected from a glass block, a glass block having wholes to form a 2D-array of fibers, a V-Groove array, or two sandwiched V-Groove arrays. In a preferred embodiment, the testing circuit may have at least one of an electrical functionality, a distance sensor, a mechanical sensor, an acceleration sensor, a force sensor, or a structure having a micro-electromechanical system (MEMS). Still, further embodiments of the testing circuit may also be feasible.

As generally used, the term "photonic integrated circuit" refers to a planar device comprising at least one of a waveguide, or a photonic device having at least one surface emitting device, or a photosensitive device, preferably selected from a photodiode, an image sensor or a Vertical cavity surface emitting laser (VCSEL). As used herein, the term "planar" indicated that a corresponding device is obtained by using 2D-lithography on a planar substrate. Based on this definition, optical fibers are not comprised by a photonic integrated circuit, whereas devices created with the ioNext platform, SiN, SOI, or silicon rich oxide are components of a photonic integrated device. The photonic integrated circuit may comprise active and passive waveguide devices, preferably selected from a photodetector, a light source, an optical modulator, a spectrum analyzer, a power splitter, or a polarization splitter, an optical filter or stripper, or an optical multiplexer. The photonic integrated circuit may also exhibit at least one advanced electrical functionality, especially a transistor, a CMOS component, an electrical line, or an electrical waveguide line. In a particularly preferred embodiment, the testing circuit and also the micro-optical component may be a photonic integrated circuit. In an alternative embodiment, the micro-optical component can be an optical integrated circuit or a micro-optical device, which may also comprise at least one of a micro-mirror, a micro-mirrors array, or a switchable micro mirror, or may be implemented as optical switch.

As already further indicated above, the optical probe further comprises at least one micro-optical element. As generally used, the term "micro-optical element" refers to an optical structure which is configured for modifying a propagation of light, in particular by at least one of focusing, diverging, redirecting, deflecting, waveguiding, or rotating a polarization of the light. For this purpose, the micro-optical element may, preferably, comprise at least one element selected from a mirror, particularly a total internal reflection mirror, a metal-coated or dielectric-coated mirror; an optical lens; an optical grating; an optical waveguide, particularly a non-planar waveguide; a photonic wirebond; a light taper; an optical metamaterial; or a whispering gallery waveguide.

The micro-optical element may, preferably, be a three-dimensional element, wherein the term "three-dimensional element" refers to an object having an extension of at least 1 µm in all spatial directions and is obtained in a direct 3D-printing process. Preferably, the micro-optical element may have at least one free-form surface, wherein the at least one free-form surface may be a computer-programmable surface. More preferred, the micro-optical element may have a 3D freeform-structure. Preferably, the micro-optical element may have overall extensions of 500 µm or less, more preferred of 250 µm or less, in particular of 100 µm or less. Preferably, the micro-optical element may have at least one optical surface of a surface roughness of 250 nm or less, more preferred of 100 nm or less, in particular of 20 nm of less, root-mean-square as measured by at least one of an atomic force microscope (AFM) or a white-light interferometer. Preferably, the micro-optical element may be transparent from 250 nm to 4500 nm, more preferred of at least 530 nm to 2700 nm; however, a different transparent wavelength range may also be feasible.

Preferably, the micro-optical element may be produced by using a polymeric material, in particular an acrylic material, especially by light curing the polymeric material. Herein, an additive manufacturing process may, preferably, be used; however, using a different type of at least one of the polymeric material or the manufacturing process may also be feasible. Preferably, the micro-optical element may be produced in a manner that an alignment accuracy of at least 1000 nm, more preferred of at least 500 nm, in particular of at least 100 nm, with respect to a coupling location at the test component may be obtained. As a result, the mode-field pitch of the micro-optical element may, preferably, vary 1000 nm or less, more preferred 500 nm or less, in particular 100 nm or less. Preferably, the micro-optical element may be produced, especially by using a direct-write method, in a manner that the alignment accuracy of at least one optical effective portion of the micro-optical element and/or portion of the micro-optical element interacting with light of at least 1 µm, more preferred of at least 500 nm, in particular of at least 100 nm, may be obtained. As used herein, the term "alignment accuracy" refers to a maximum deviation of a positioning or fabrication process compared to a defined location. Preferably, the micro-optical element may be produced in a manner that a shape accuracy of the micro-optical element of at least 1 µm, more preferred of at least 500 nm, in particular of at least 100 nm, may be obtained. As used herein, the term "shape accuracy" refers to a maximum deviation that is to be expected for a single device when performing a measurement and comparing a measured shape to a defined shape. The measurement may, preferably, be performed by using a white-light interferometry measurement, a confocal measurement, or a fluorescence measurement.

The optical structure of the micro-optical element which is configured for modifying the propagation of light can, preferably, be configured to generate a mode-field diameter of the wavelength of the light up to 100 µm, preferably even more. Preferably, the generated mode-field diameter may be close to the mode-field at the coupling location of the micro-optical component. Herein, generating the mode-field diameters refers to an optical arrangement which configured to create a mode-field having the corresponding mode-field diameter. By way of example, at a wavelength of 1.55 µm of incident light, the mode-field diameter may, preferably, be 1.55 µm to 100 µm. As generally used, the term mode-field diameter refers to a diameter at a 1/e² intensity of a waist of a light beam; however, using a different definition may also be feasible. In general, the mode-field diameter may be measured at the waist of the light beam, which may, typically, be aligned with a coupling location to achieve a best coupling between the probe head and the at least one micro-optical component. A one-sigma-variation of the mode-field diameter between different structures may, preferably, be 20 % or less, more preferred 10 % or less, while a resulting coupling variation may, preferably, be 5% or less when coupling into identical components.

In a preferred embodiment, the test component may reduce a mode-field diameter at a coupling location of the test component to generate a divergent beam being emitted by the coupling location of the test component. This embodiment allows designing a particularly compact micro-optical element having a relatively large working distance. Smaller mode fields of the test component compared the mode fields of fiber cores may result in a micro-optical element having reduced dimensions and, therefore, enabling a probing in narrower trenches. In addition, a time for producing of the micro-optical element can be decreased.

In a preferred embodiment, the test component may be configured to provide mode fields having a selected pitch and a selected mode-field diameter. As generally used, the term "pitch" refers to a distance between two objects, in particular optical elements, two coupling locations, two mode fields, or two parallel waveguides. The pitch may be irregular or constant. A preferred pitch may be selected from a value of 80 µm and below, 127 µm or 250 µm; however, using a different value may also be feasible. A micro-optical component having a particular pitch is used herein as a micro-optical component comprising at least one pair of coupling locations, mode fields or parallel waveguides having the particular distance. A pitch variation refers to a deviation from a specification. Further, the expression "modification of a pitch" either refers to altering the valued of a pitch, e.g. from a pitch of 127 µm at the fiber array connected to the test component to a different pitch e.g. 20 µm at the micro-optical component, or to equalizing a pitch, by e.g. compensating small variations of a fiber array pitch. Herein, the term "equalizing" refers to a process of reducing pitch inaccuracies of a fiber array, typically up to 1 µm to a pitch variation of at least 500 nm, preferably of at least 100 nm, in particular of at least 50 nm. The equalization can, preferably, be combined with a calibration measurement which takes into account a variation of the transmission. For the term "fiber array", reference can be made to the definition above. In a preferred embodiment, the test component may match different pitches, particularly to overcome known shortcomings that no pitches below 80 µm are currently achievable by using a fiber array as the optical fiber, which has a typical minimum diameter of 80 µm. Processes which may reduce the fiber diameter to 80 µm or less may often result in a larger pitch variation and are, therefore, not desirable.

As further already indicated above, the micro-optical element is a separate element with regard to the test component. As generally used, the expression that two individual elements are "separated from" each other refers to a spatial arrangement in which two individual elements comprise different materials and/or are generated by applying at least one processing step to at least one of the elements independent from the other element. By way of example, a prism may be 3D-printed on an already existing fiber, thereby not altering the fiber, whereby the prism is considered as being separated from the fiber. In contrast hereto, the prism it is not considered as being separated from the fiber if the prism may be introduced into the already existing fiber, e.g. by milling, etching or polishing the prism into the fiber. The feature that the micro-optical element is a separate element with regard to the test component exhibits the advantage that a design freedom and a precision of the micro-optical element can be higher compared to a micro-optical element which is not a separate element with regard to the test component.

As further already indicated above, the micro-optical element is in mechanical contact with the test component. As further generally used, the term "mechanical contact" refers to a spatial arrangement of two individual elements in that the two individual elements maintain their spatial position with respect to each other. Herein, the mechanical contact may be a direct mechanical contact or an indirect mechanical contact. Whereas the term "direct mechanical contact" indicates a spatial arrangement in which both individual elements touch each other at adjoining points or surfaces, the term "indirect mechanical contact" indicates a further spatial arrangement in which both individual elements maintain their spatial position by using at least one further element. By way of example, the at least one further element may be a common carrier to which the two individual elements are mounted, or a separating element between the two individual elements. In preferred embodiments, the micro-optical element may be in mechanical contact with the test component by having attached the micro-optical element to a facet comprised by the test component, or a 3D-printed spacer may be placed between the micro-optical element and the test component, or the micro-optical element may be attached to a mechanical support, in particular a fixture, which may, directly or indirectly, be in mechanical contact with the test component. For this purpose, the micro-optical element may be fixed to the mechanical support which is in mechanical contact with the test component. As generally used, the term "fixing" refers to particular process applied to one or two elements, wherein the particular process results in a permanent mechanical contact between the two elements. Preferably, a joining element, such as a mechanical clamp, can be used for fixing the two elements. Herein, the process may, especially, comprise applying at least one adhesive, preferably a UV curable adhesive, and curing the adhesive, or a mechanical clamp. In a preferred embodiment, an adhesion promoter may be used to increase a robustness of the mechanical contact.

According to the present invention, the micro-optical element is configured to optically couple at least one light beam between the test component and the micro-optical component. As generally used, the term "light" refers to electromagnetic radiation in the near ultraviolet range, the visual range, the near infrared range, and the medium infrared range, referring to a wavelength range of 100 nm to 10 µm, preferably of 200 nm to 4 µm, more preferred 400 nm to 2.7 µm, especially at least 1250 nm to 1650 nm. As further generally used, the term "light beam" refers to a free-space propagation of light, which is emitted or received by an optical component, particularly by the test component or the micro-optical component.

As further generally, the term "optically coupling" refers to a process of transmitting light, especially a light beam, between two optical elements, preferably two waveguide-based elements. By way of example, the coupling process may comprise transmitting a light beam from a laser into an optical waveguide, or between two individual optical waveguides. Preferably, the coupling process may be performed in a manner that the optical coupling between the two optical elements may be maximized, in particular by translating or tilting at least one of the optical elements with respect to each other. In a further preferred embodiment, a tolerance may be maximized, e.g. by using a large mode field, wherein the term "tolerance" refers to an alteration of an optical coupling with respect to at least one of a translational movement or a rotational movement.

In particular, the term "coupling location" refers to a site on a surface of an object, such as of a test component or of a micro-optical component or a portion thereof, which is designed for providing the optical coupling between two optical elements. Further, the term "coupling efficiency" is generally used for indicating a resulting effect of the optical coupling as achieved by the coupling process between the two optical elements. Preferably, a coupling efficiency between two optical waveguides may be 0.05 dB to 3 dB. However, only a significantly lower coupling efficiency can be acceptable in certain embodiments as known to the person skilled in the art. Further, the term "coupling tolerance" corresponds to a reduction of 1 dB with respect to a translational movement. The coupling tolerance may, preferably, be at least 1 µm, preferably at least 2.5 µm, more preferred at least 5 µm, in a transversal direction with regard to a light beam and at least 2 µm, preferably at least 5 µm, more preferred at least 10 µm, in a direction of the light beam. Similarly, a rotational tolerance may, preferably, be at least 0.1°, preferably at least 0.5°, more preferred at least 1°.

The micro-optical element, which is configured to optically couple at least one light beam between the test component and the micro-optical component, is, in accordance with the present invention, configured to determine an emission characteristics of a coupling location comprised by of the micro-optical component. As used herein, the term "emission characteristics" refers to at least one parameter being indicative for at least one property of at least one optical element related to an emission of at least one light beam by the at least one optical element. Herein, the emission characteristics may, preferably, refer to the optical micro-optical component; however the emission characteristics of at least one further optical element, particularly selected from the probe head, the micro-optical element, the test component, especially the photonic integrated circuit, or the fiber array, can also be referred to. The emission characteristics may, especially, refer to at least one of a quantity, a total power, a wavelength, a mode-field diameter, an ellipticity, an astigmatism, a stray light, a scattered light, a fluorescence, or M² of a light beam, wherein the term "M²" refers to a quality by performing a divergence measurement of the light beam; however, using at least one further quantity of the light beam may also be feasible. Alternatively or in addition, the emission characteristics may refer to a coupling efficiency of a known mode field to the micro-optical component, a polarization property, a back-reflection property, a pitch, a pitch-accuracy, an emission direction, an alignment accuracy with respect to a coupling location, a spatial and/or angular distribution of at least one light beam emitted into free space. As a further alternative or in addition, the emission characteristics measurement may also refer to an optical performance of the micro-optical component or a functionality within the micro-optical component, wherein the optical performance may refer to a modulation speed of a modulator, an extinction ratio, a laser performance such as a relative intensity noise, a light current-voltage (LIV) characteristics, a waveguide propagation loss, a linewidth, an amplification of a semiconductor optical amplifier (SOA), a responsivity of a photodiode, a bandwidth of an optical element in a temporal domain and/or a frequency domain, a back-reflection, a bit-error rate of an optical data transmission, a pitch, a transmission; however, using at least one further parameter may also be feasible.

For this purpose, the test component may have an optical functionality, wherein the optical functionality may be independent from the optical functionality operating the micro-optical element. In addition, the test component may have at least one of a mechanical functionality or an electrical functionality. As generally used, the term "optical functionality" indicates that the test component comprises at least one photonic integrated circuit, which is configured for characterizing the emission characteristics of a micro-optical component as described above. Similarly, the term "mechanical functionality" indicates that the test component comprises at least one functionality, which is configured for characterizing at least one mechanical performance of a micro-optical component, particularly selected from at least one parameters of a MEMS actuator, in particular a response time, or a mechanical behavior of a surface acoustic wave sensor. Further, the term "electrical functionality" indicates that the test component comprises at least one functionality which is configured for characterizing at least one electrical performance of a micro-optical component, particularly selected from at least one of a characteristics parameters of a semiconductor junction such as capacitance, a performance of a modulator, an operating parameter of a laser, or a photocurrent configured for measuring a resistance.

In general, characterizing the emission characteristics refers to a measurement of an emission performance. The purpose of characterizing the emission characteristics is to generate a temporary optical coupling to determine the emission characteristics. Herein, a measurement of the emission characteristics may, in particular, comprise measuring at least one of a pitch, a mode field, an angular distribution of a light beam emitted from the optical probe, a coupling efficiency to a known component and a transmission from an optical fiber connected to an optical probe into free space. The measurement of the emission characteristics may, in addition, comprise measuring at least one mechanical or electrical property related to an emission at least one optical signal, e.g. a characterization of a micromechanical switch for switching light beams between waveguides. In contrast hereto, optical packaging is not used herein for characterizing the emission characteristics of the micro-optical component, since optical packaging provides a permanent optical connection in order to effect an operation of the micro-optical component rather than measuring its emission characteristics.

In a preferred embodiment, the emission characteristics of the probe head may be calibrated. As generally used, the term "calibrated" refers to a measurement of a performance of an element, particularly of the probe or the micro-optical component, which is accounted for in a subsequent step. Preferably, the calibration may comprise a numerical compensation of a measured coupling loss, a rework, scrapping an element or altering measurement parameters in a subsequent step according to the characterizing the emission characteristics. For a purpose of calibration, the probe head may comprise at least one reference structure, such as a single-mode fiber facet which is configured to be intentionally left open and to define a 0° emission direction. Alternatively or in addition, the probe head my comprise at least one further reference structure which may be designed as a type of reference, particularly as a power reference.

As further already indicated above, the micro-optical component further comprises a beam-shaping element. As generally used, the term "beam-shaping element" refers to an optical element, which is configured to alter at least one parameter of a light beam that impinges the beam-shaping element and is, subsequently, emitted by the beam-shaping element. This process of impinging and, subsequently, being emitted is also referred to by the expressions "travelling" or "propagating" through the respective optical element. For this purpose, the beam-shaping element is arranged in a manner that at least a portion of the light beam, preferably the complete light beam, is travelling through the beam-shaping element. In particular, the at least one parameter of the light beam that is altered by the beam-shaping element may be selected from at least one of a mode-field diameter, a divergence angle, an emission direction in at least one dimension, a polarization property, a reflectivity, or a phase front. In a particularly preferred embodiment, the beam-shaping element may be configured to expand the light beam to having a mode-field diameter of at least 25 µm, preferably of at least 10 µm, in particular of at least 5 µm, wherein the mode-field diameter is measured at 1/e² intensity at a diameter of the light beam. The beam-shaping element may, preferably be selected from at least one of a 3D-taper, a mirror, a total-internal reflection mirror, a 3D-printed micro-optical element, especially an optical lens, or a micro-optical element, especially a spherical or an aspherical micro-lens, a beam-splitter, an isolator, a grating, or a polarizer.

In a particularly preferred embodiment, an alignment of the beam-shaping element to the micro-optical component may be altered while measuring the emission characteristics of the beam-shaping element. As used herein, the term "alignment" refers to a spatial positioning of the beam-shaping element to the micro-optical component. In particular, a process of optimizing the alignment of two components with respect to each other while performing a measurement, especially of a coupling efficiency, is often referred to as "active alignment". In a preferred embodiment, a position of the probe-head with respect to the micro-optical component and the position of the beam-shaping element with respect to the micro-optical component may be varied in a manner that a maximum coupling from the probe head to the micro-optical component, or vice versa, may be achieved. In a further preferred embodiment, the probe head may be brought into a defined position relative to the micro-optical component and the beam-shaping element may be positioned in a manner that the coupling from the probe head to the micro-optical component, or vice versa, may be maximized. The positioning of the probe head with respect to the micro-optical component may be achieved by using a sensor structure as described below in more detail. In a further preferred embodiment, the position of the beam-shaping element with respect to the micro-optical component may be fixed after maximizing the coupling. For this purpose, light hardening adhesive, particularly selected from a UV-curable epoxy or an acrylic may be used. In a further preferred embodiment, the positioning of the beam-shaping element with respect to the micro-optical component may pre-compensate a shrinkage during curing. For this purpose, the beam-shaping element may be placed in a manner that the beam-shaping element may be brought into the position of best coupling upon curing of an adhesive.

In a particularly preferred embodiment, the probe head may be configured to detect a deviation of the light beam travelling through the beam-shaping element. As generally used, the term "detecting" or any grammatical variation thereof refers to a process of generating a representative result for at least one parameter, here a deviation of the light beam propagating at a predefined path. As used herein, the term "deviation" refers to a difference between an expected path of the light beam and an observed path of the light beam. For a purpose of detecting the deviation of the light beam travelling through the beam-shaping element, a first measurement of a position of the probe head relative to the micro-optical component and a second measurement of the emission characteristics of the coupling location may be performed. As generally used, the term "measurement" refers to a process of determining at least one value for a particular parameter. In a preferred embodiment, if the first measurement of the position of the probe head relative to the micro-optical component may show that a measured optical coupling may not be sufficiently high, the test component may be moved in a manner that best optical coupling can be achieved, whereinafter the at least one second measurement of the emission characteristics of the coupling location may be performed. However, both types of measurements can also be performed in a different fashion.

For this purpose, the optical probe may, additionally, comprise a distance sensor configured to determine the position of the probe head relative to the coupling location out of the surface of the micro-optical component or a portion thereof. The term "distance sensor" refers to a device which is configured to perform at least one distance measurement method, especially to determine the distance of at least one sensor structure with respect to the at least one alignment marker. Herein, the distance measurement method may, particularly, be selected from a time-of-flight method; a coherence-based method, such as white light interferometry; or a chromatic aberration measurement, preferably using light in the visible range.

In a particularly preferred embodiment, the optical probe may further comprise at least one sensor structure. As generally used, the term "sensor structure" refers to a portion of an object which is configured to determine at least one value for at least one parameter. As used herein, each sensor structure may be configured to determine the position of the probe head relative to the micro-optical component, preferably by detecting at least one corresponding alignment marker on a surface of micro-optical component or a portion thereof. As further generally used, the term "alignment marker" refers to a further portion of an object, preferably a fixed position on the surface of the object or the portion thereof, which is configured to be used in determining at least one reference position, wherein the term "reference position" refers to at least one value for at least one parameter related to a location of an element, especially related to a position, a distance, a translation, or an orientation of the element with regard to the alignment marker. For the purpose of the present invention, the at least one alignment marker may be detectable by the sensor structure. The alignment marker may, preferably, be a portion of an object which is designed to facilitate, enable or serve for a purpose of alignment of the probe head with respect to the micro-optical component, especially selected from a lithographically defined structure, a mechanical structure, or a coupling location.

In a preferred embodiment, the sensor structure may be or comprise a diffractive structure, particularly a grating structure, while the alignment marker may also be a grating structure, such that an interference of at least one light beam being diffracted at both gratings can be used for detecting a position of the alignment marker with respect to the sensor structure. In this preferred embodiment, a metal-on-glass mask or an etched glass can be used as an implementation for such a type of position sensor. In particular, the sensor structure can be implemented as a micro-optical object which is sensitive to a position of an incident light beam having a particular mode-field but being independent of an angular direction of the incident light beam. For this purpose, a high numerical aperture (NA) lens having a small mode-field may, preferably, be used. This embodiment may be preferred if only a position of an incident light beam may be analyzed irrespective of the angle of the incident light beam. As an alternative, the sensor structure can be implemented as a micro-optical object which is sensitive to an angle of an incident light beam having a particular mode-field but being independent of a position of the incident light beam. For this purpose, a low-NA lens having a large mode-field may, preferably, be used. This embodiment may be preferred if only an angle of an incident light beam may be analyzed, irrespective of the position of the incident light beam.

Further, the sensor structure can be or comprise a mirror surface, in particular a total internal reflection (TIR) mirror, or a coated mirror configured to receive at least one light beam from a detector in a particular direction without having to rotate or move the probe head. Further, the sensor structure can be or comprise an optical fiber, a photonic-integrated circuit, a photodiode, a waveguide coupled photodiode, or a refractive surface, in particular a tilted refractive surfaces with respect to the propagation direction of an incident light beam, also configured to receive at least one light beam from a detector in a particular direction without having to rotate or move the probe head. The sensor structure may be operated in a receiving mode, whereas the alignment marker may emit in an emitting mode, while the sensor structure may receive. As an alternative, the sensor structure may be operated in a bi-directional mode, while an optical signal may be emitted and received at the same time by the sensor structure, or an optical signal may be reflected at the sensor structure or at the at last one alignment marker. In a particularly preferred embodiment, either the sensor structure or the at least one alignment marker may be designed as a retro-reflector, especially selected from a corner cube or a spherical object. The sensor structure may, preferably, located in a maximum distance of 2 mm, more preferably of 1 mm, particularly of 500 µm, from the micro-optical element. In a preferred embodiment, the sensor structure may be produced in a direct-write process, especially selected from two-photon polymerization or multi-photon polymerization. In a further preferred embodiment, the sensor structure may be produced in the same process as the micro-optical element.

In a still further embodiment, the sensor structure may be a functionality of the micro-optical element or may be identical to the micro-optical element. In this embodiment, it is important that the at least one first measurement of the position of the probe head relative to the micro-optical component is still separately performed from the at least one second measurement of the emission characteristics of the coupling location. Herein, the term "separately" refers to a manner of performing both types measurements in which at least one of the following parameters is changed between the at least one first measurement and the at least one second measurement:
- detecting an alignment marker which is not a coupling location;
- detecting a reference coupling location which is different to the coupling location;
- a sensor structure which is different to the micro-optical element detects an alignment marker which may be a reference coupling location that may be identical to a coupling location; and/or
- a property a light beam, such as a wavelength or a polarization, is altered in a manner that the emission characteristics of the coupling location is significantly different, wherein the term "significantly" indicated that an emission direction changes by at least 10°, a power transmitted by at least 3 dB, a divergence by at least 10°, or a polarization principal axis by at least 30°. The unaltered light beam can then be used as the optical signal, while the altered light can then be used as the at least one position signal indicative for a position of the probe head relative to the micro-optical component or the portion thereof.

In a preferred embodiment, the alignment marker may be lithographically defined, inscribed, 3D-printed and designed for the purpose of obtaining the reference position. Preferably, the alignment marker may be located at an arbitrary site on a surface of an object having a fixed mechanical relationship to a coupling location or a waveguide, wherein the object may, especially, be selected from the micro-optical component, a wafer comprising a plurality of micro-optical components, or a separate component with regard to the micro-optical component or the wafer having a known, a measured, or well-defined translational and rotational alignment with respect to the micro-optical component or the wafer. In particular, the separate component can be an external measurement target, such as a glass mask or a lithographically defined object located close or adjacently to the micro-optical component or the wafer. In a particular embodiment, the alignment marker may be or comprise a periodic structure or a quasi-periodic structure, wherein the structure can be configured to be used for balancing etch load over the wafer. In particular, the alignment marker may be implemented by etching a grating structure in a Si layer of a Silicon-on-Insulator (SOI) wafer, or by an etching process generating a structure exhibiting a strong spatial dependency of emission, transmission or reception of a light beam impinging on the alignment marker or being emitted by the alignment marker, particularly selected from a phase mask, a Fresnel lens, a Bulls-Eye resonator, or a grating structure. For this purpose, a grating coupler or a grating-coupler loop-back structure can be used, wherein a first light beam may impinge on a first grating coupler while and a second light beam transmitted through a waveguide within the micro-optical component may impinge on a second grating coupler. Alternatively, the same alignment marker may be implemented as a grating coupler may receive and emit at least one light beam while being connected to a reflective element, particularly selected from a Sagnac mirror or a grating-based reflective element, or an edge-coupled waveguide. Herein, the optical signal may be received by a first sensor structure and, optionally, thereafter by a second sensor structure. Herein, a reference coupling location may be used which may not be equipped with a beam-shaping element. As an alternative, a reference coupling location may be used which may interacts with a beam-shaping element at a later position along the light beam emitted by the reference coupling location.

In a preferred embodiment, the alignment maker may be located at an opposite of a side of an object facing the probe head. In this embodiment, an optical signal that can be used for detecting the alignment maker travels through the micro-optical component or the wafer, which may, therefore, be transparent for the optical signal. In a preferred embodiment, the alignment marker may create an optical or electronic signal, which is being indicative for a direction of a misalignment. In this manner, it can be indicated in which direction the probe head has to move in order to achieve a proper alignment.

In a further preferred embodiment, the alignment marker may be located within a wafer comprising a plurality of micro-optical components. Herein, a number of alignment markers to be detected within a single wafer may be lower than a number of micro-optical component, whereby at least two micro-optical component be tested by using the same alignment marker. In a further embodiment, a mechanical alignment structure on a surface, such as a chip edge, a trench, or a V-Groove; a 3D-printed structure, or a photonic device, such as an optical waveguide, or a grating coupler, can, additionally, be detected and used as a further position reference in addition to the alignment maker.

The alignment marker may, in particular, be configured to provide a sensor signal indicative of a positioning of the probe head relative to an object. For this purpose, the sensor signal may, preferably, be very sensitive to movement of the probe head with respect to at least one alignment marker in a plane of the surface of the micro-optical component or a portion thereof. Herein, the at least one alignment marker may be designed in a manner that it may receive, reflect, and/or emit a small mode-field, while the at least one sensor structure may be designed that it may receive or emit at least one light beam to the small mode-field. For this purpose, the at least one sensor structure can be an optical lens configured to generate a mode-field of not more than 10 times the wavelength (e.g. 15 µm at a wavelength of 1500 nm), more preferred of not more than five times the wavelength (e.g. 7.5 µm at the wavelength of 1500 nm), in particular of not more than twice the wavelength (e.g. 3 µm at the wavelength of 1500 nm). This embodiment can, inherently, be sensitive to a movement out of the plane defined by the surface of the micro-optical component or the portion thereof, especially since a small mode-field, typically, implies a small Rayleigh range. In a preferred embodiment, a plurality of alignment markers having a known distance from each other can be measured. By using at least three alignment markers located at different positions at a known distance with respect to the surface of the micro-optical component or the portion thereof and by locating each alignment marker not along a single line, both a positional alignment and an angular alignment in six degrees of freedom, i.e. three rotational and three translational degrees of freedom, of the probe head with respect to the micro-optical component can, preferably, be obtained. By placing the different alignment marker at a larger distance with respect to each other, a higher angular accuracy can be achieved.

In an alternative embodiment, a plurality of alignment markers having a large mode-field may be used, while the at least one sensor structure may also have a large mode-field. In this embodiment, an accurate angular alignment of the probe head with respect to the micro-optical component can, preferably, be obtained by detecting only a single alignment marker, especially since the coupling efficiency of large mode-fields is highly angular dependent. As a result, a measurement of at least one of transmission, reflection, emission or transmission between the at least one sensor structure and one of the alignment markers allows precisely determining an angular orientation of the probe head with respect to the micro-optical component, particularly by moving the probe head into a position of best coupling between the at least one sensor structure and one of the alignment markers.

The probe head may, preferably, approach the at least one the micro-optical component or the wafer comprising a plurality of micro-optical components from a top side or a bottom side. The at least one alignment marker allows to precisely align both the probe head and the at least one micro-optical component or the wafer with respect to each other. The alignment marker may be part of the at least one micro-optical component or a dedicated calibration structure that is aligned to the at least one micro-optical component. The alignment marker may be a reference coupling location, or may be a mechanical alignment structure. The alignment marker may be located at a side of the at least one micro-optical component or the wafer facing the probe head or the opposite side of the at least one micro-optical component or the wafer.

In a preferred embodiment, both a surface and an alignment marker on a surface of a particular micro-optical component or a portion thereof can be detected. In particular, the surface can be detected at multiple locations, whereby an angular alignment of the probe head with respect to the surface in at least one dimension and, optionally, a translational alignment in at least one dimension can be detected. Herein, a detection of the alignment marker allows detecting the translational alignment of the probe head with respect to the particular micro-optical component in at least one dimension and, optionally, a rotation alignment of the probe head with respect to the particular micro-optical component in at least one dimension. The position of a coupling location with respect to the surface or the alignment marker may further, generally, be known by a design or a prior knowledge of the particular micro-optical component and can, therefore, be used for a correlation.

In particular, the sensor structure may be configured to detect at least one alignment marker. In a preferred embodiment, the sensor structure may further be configured to detect a reference coupling location as comprised by the micro-optical component, wherein the reference coupling location may be configured to provide a position reference of the position of the probe head relative to the micro-optical component, wherein the position reference is configured to determine the emission characteristics of the coupling location. In this embodiment, the reference coupling location may differ by design from the coupling location to be analyzed. As used herein, the term "differ" refers to an embodiment in which the reference coupling location carries a beam-shaping element, whereas the coupling location does not, whereby the alignment of the beam-shaping element with respect to the micro-optical component, a waveguide, or a facet can be determined. In a further embodiment, the reference coupling location may differ from the coupling location to be analyzed by the reference coupling location being a different type of coupling location. By way of example, the reference coupling location may be a grating coupler while the coupling location may be an edge coupler, or vice versa. In an alternative embodiment, the reference coupling location may be identical to the coupling location to be analyzed except for a different mod field or a different emission angle.

In a further embodiment, a plurality of sensor structures may be configured to measure at least one alignment marker. In an alternative embodiment, a plurality of alignment markers may be measured by using at least one sensor structure. In particular, a measurement by using a plurality of sensor structures or alignment markers, respectively, may be performed simultaneously in order to detect a distance difference between the a plurality of the sensor structures or the alignment markers, respectively, thereby determining the position of the probe head relative to the micro-optical component.

Coupling a large mode field emitted or received by a reference coupling location may, generally, result in a high sensitivity with respect to the coupling efficiency of the alignment of the probe head with respect to the micro-optical component. A preferred mode field size of mode field in such measurements may be at least 20 µm, more preferred at least 30 µm, particularly at least 40 µm. For this purpose, the sensor structure may be designed in a manner that it couples maximal to a large mode field, especially by having the same mode field. By aligning the probe head to maximum coupling efficiency, a very precise indication of a pointing direction of a mode field can be provided without being required to measure the mode filed at multiple locations.

In a further embodiment, the coupling location may be comprised by a detachable optical connector. As generally used, the term "detachable optical connector" may refer to an optical element which is configured to be placed and/or removed from a surface of an object, wherein the optical element is configured to propagate at least on light beam in a predefined manner. In particular, the detachable optical connector may, especially, be selected from a facet-attached or a chip-surface attached micro-lens, or a micro-lens micro-fabricated within a micro-optical component. However, using a different type of detachable optical connector may also be feasible.

The at least one micro-optical element may be configured to mimic a behavior of at least one optical component, such as a lens, a prism, a receiver, or a light source, which is used in conjunction with the micro-optical component under testing in a later fabrication step. By placing the probe head at a precisely known position with respect to the micro-optical component by detecting the at least one alignment marker, the at least one micro-optical element mimicking the at least one optical component can be placed at a predefined position of the at least one optical component, thereby providing a precise prediction on a functionality of the micro-optical component in combination with the at least one optical component. The probe head can have the same optical properties as the detachable optical connector and placed at a position designated for the connector. By moving the probe head within the expected mechanical tolerances of the detachable optical connector, a precise prediction of a successful assembly of the probe head with the detachable optical connector can be made. The same approach can *mutatis mutandis* be used for light sources or chips.

In a further aspect, the present invention relates to a method for producing an optical probe configured for optical testing of at least one micro-optical component, in particular the optical probe as described elsewhere herein. The method comprises at least the following steps (i) and (ii):
(i) providing a probe head, wherein the probe head comprises a test component; and
(ii) generating at least one micro-optical element and at least a sensor structure by using a direct-write process, wherein each of the micro-optical element and the a sensor structure is being generated as a separate elements with regard to the test component and in mechanical contact with the test component,
wherein the micro-optical element is configured to optically couple at least one light beam between the test component and a micro-optical component, thereby being configured to determine an emission characteristics of a coupling location comprised by the micro-optical component, wherein the micro-optical component further comprises a beam-shaping element, wherein the beam-shaping element is arranged in a manner that at least a portion of the light beam is travelling through the beam-shaping element.

Herein, the indicated steps may, preferably, be performed in the given order, commencing with step (i) and finishing with step (ii). However, any or all of the indicated steps may also be repeated several times and/or preformed concurrently in part.

According to step (i), the probe head is provided, wherein the probe head comprises a test component. For the terms "probe head" and "test component", reference can be made to the definitions above.

According to step (ii), the at least one micro-optical element and the at least a sensor structure are generated by using a direct-write process, wherein each of the micro-optical element sensor structure is being generated as separate element with regard to the test component and in mechanical contact with the test component, in a manner that the micro-optical element is configured to optically couple at least one light beam between the test component and the micro-optical component, thereby being configured to determine the emission characteristics of a coupling location comprised by the micro-optical component. For the terms "micro-optical element", "separate element" and "mechanical contact", reference can be made to the definitions above.

As generally used, the term "direct-write process" refers to a process in which a programmable beam, particularly selected from a photon beam or an electron beam, alters a solvability of a material, especially of a photoresist, in a manner that, after a development step, a desired structure is obtained. In a particularly preferred embodiment, a multi-photon absorption process of a material is used, preferably of acrylic material that is cross-linked upon irradiation, preferably by using a fs-laser and a negative-tone resist. By way of example, by laser irradiation the acrylic material is polymerized in a manner that it is less curable after the development step. Preferably, a light distribution may be spatially modified while irradiating the photoresist. More preferred, the spatial light distribution may be spatially modified by scanning a laser beam by using a galvo scanner, or by dynamically altering a photomask, especially by a spatial light modulator. Herein, the irradiation may alter the solubility of the photoresist. In particular, the photoresist may be liquid prior to irradiation, and may cured upon irradiation. Particularly preferred, two-photon polymerization or multi-photon polymerization may be used herein for curing of the photoresist; however using a different type of irradiation may also be feasible. After irradiation the structure may be developed by using at least one solvent being configured to remove not-cured resist portions, particularly selected from 1-Methoxy-2-propylacetat (PGMEA), 1-Methoxy-2-propanol (PGME), or 2-Propanol (IPA).

In a preferred embodiment, the micro-optical elements may be produced on the test component which may be connected to a single-mode fiber array, a single-mode fiber array, or a transparent substrate. In a further preferred embodiment, the test component may be produced in the same wafer run as the micro-optical component or in the same production step of an interposer configured for coupling a further micro-optical component to an optical fiber. In this manner, arbitrarily complex pitch sequences matching different pitches of the test component can be achieved. Additionally, time and effort required for producing an optical probe can be reduced in this manner, particularly since the test component is available at the same point of time as the micro-optical component.

In a preferred embodiment, the method may, further, comprise the following step:
(iii) detecting at least one alignment marker within the test component prior to step (ii);
(iv) generating at least one alignment marker configured for alignment during step (ii); As generally used, the term "alignment marker" refers to a structure which is configured for alignment in at least one degree of freedom. Herein, the alignment marker may be a structure, explicitly or implicitly, dedicated for this purpose, or it may be a functional element, especially selected from a waveguide or a ridge, of the test component. A particular alignment marker may already be comprised by the test component during step (i), or it may be generated in the direct-write process during step (ii). In particular, the alignment marker may facilitate the alignment between the probe head and the micro-optical component to optically couple light. In this manner, an automated alignment between the probe head and the micro-optical component with respect to each other can be achieved.

In a preferred embodiment, the alignment marker can be generated during step (iv) by using a lithography process, preferably the same lithography process which is already used for generating at least one optical element within the micro-optical component. In particular, the same lithography process for generating at least one photonic element, such as a waveguide, used for generating the reference coupling location can also be used for generating the alignment marker.

In a preferred embodiment, a spatial emission characteristics and/or an angular emission characteristics of a sensor structure with respect to a micro-optical element, such as an emission direction or an emission offset, can be determined from a design of the optical probe, especially by using a parameter measured during production, such as a fiber pitch, or by using calibration. In particular, a position of the sensor structure with respect to the micro-optical element can be determined within a position accuracy of 5 µm, preferably of 1 µm, more preferred of 0.1 µm. Similarly, the arrangement of the sensor structure with respect to the micro-optical element can, preferably, be determined within an angular accuracy of 5°, more preferred of 1°, in particular of 0.1° or less.

For further details concerning the method for producing an optical probe, reference can be made to the disclosure of the optical probe as provided elsewhere herein.

In a further aspect, the present invention relates to a method for optical testing of at least one micro-optical component, in particular by using the optical probe as described elsewhere herein. The method comprises the following steps a) to c):
a) providing an optical probe, wherein the optical probe comprises a probe head and at least one micro-optical element, wherein the probe head comprises a test component, wherein the micro-optical element is a separate element with regard to the test component and in mechanical contact with the test component;
b) positioning the probe head in a manner that the micro-optical element optically couples at least one light beam between the test component and the micro-optical component, wherein the micro-optical component comprises a beam-shaping element, wherein at least a portion of the light beam is travelling through the beam-shaping element; and
c) determining an emission characteristics of a coupling location comprised by the micro-optical component.

Herein, the indicated steps may, preferably, be performed in the given order, commencing with step a) and finishing with step c). However, any or all of the indicated steps may also be repeated several times and/or preformed concurrently in part.

According to step a), an optical probe, preferably the optical probe as described elsewhere herein, is provided.

According to step b), the probe head is positioned in a manner that the micro-optical element optically couples at least one light beam between the test component and the micro-optical component, wherein the micro-optical component comprises a beam-shaping element, wherein at least a portion of the light beam is travelling through the beam-shaping element.

According to step c), the emission characteristics of a coupling location comprised by the micro-optical component is determined by measuring a signal being indicative for the emission characteristics of the micro-optical component.

In a particularly preferred embodiment, the method for optical testing of the at least one micro-optical component may, further, comprises at least one of the following steps:
d) calibrating the emission characteristics of the probe head prior to performing step b), preferably in the index matching liquid;
e) measuring an alignment marker within the micro-optical component;
f) inserting at least one part of the micro-optical element into a trench comprised by the micro-optical component in a manner that the light is optically coupled between the test component and the micro-optical component;
g) altering a temperature of the micro-optical component or a surface thereof at least during step d);
h) operating the optical probe or the micro-optical component by using a broadband light source having a linewidth of at least 5 nm at least during step c);
i) aligning the beam-shaping element with respect to the micro-optical component at least during step c).

For further details concerning the method for optical testing of at least one micro-optical component, in particular by using an optical probe, reference can be made to the disclosure of the optical probe as provided elsewhere herein.

As used herein, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

### Advantages of the invention

With respect to the prior art, the optical probe and the related methods exhibits the following advantages. The optical probe can be configured for optical testing of components on die, batch, and wafer level. The optical probe may have a compact probe head that can be inserted and probe in a trench of a wafer, wherein the trench may, preferably, 250 µm or less, more preferred 100 µm or less, especially 80 µm or less. Further, the optical probe can be configured for a small pitch, preferably of 127 µm or less, more preferred of 80 µm or less, especially of 50 µm or less. Herein, having a high pitch accuracy of sigma = 300 nm or better and a low mode-field size variation of sigma = 10% or less is possible.

Further, the optical probe can be configured for a high port count, preferably of at least 24, more preferred of at least 64, especially of at least 128. Preferably, a small mode-field diameter, preferably of 10 µm or less, more preferred of 5 µm or less, especially twice an operation wavelength or less, may be available at a coupling location of the test component. Further, a calibration of probe variations may be possible. The optical probe can be configured for robust probing even at high working distances. Preferably, the optical probe may implement one or more functionalities, such as distance measurement, local probing of polarization, multiplexing, modulation, spectral analysis, intensity and phase measurements, heterodyne detection and transmittance of signals. In addition, achieving a high testing throughput by parallelization, measurement of more than 1 channel or by switching involving no mechanical movements, is possible.

Further, the optical probe can be configured for working in the near ultraviolet range, the visual range, the near infrared range, and the medium infrared range, referring to a wavelength range of 100 nm to 10 µm, preferably of 200 nm to 4 µm, more preferred 400 nm to 2.7 µm, especially at least 1250 nm to 1650 nm. A high reproducibility of the optical coupling between the probe head and the at least one micro-optical component with variations of 0.5 dB or less, more preferred of 0.25 dB or less can be obtained.

Further, the optical probe can be configured for working in the near ultraviolet range, the visual range, the near infrared range, and the medium infrared range, referring to a wavelength range of 100 nm to 10 µm, preferably of 200 nm to 4 µm, more preferred of 400 nm to 2.7 µm, especially of at least 1250 nm to 1650 nm. A high reproducibility of the optical coupling between the probe head and the at least one micro-optical component with a variation of 0.5 dB or less, more preferred of 0.25 dB or less, can be obtained.

The optical probe and the related methods can be used for testing of a detachable optical connector. Unlike alternative methods, especially based on short-wavelength infrared cameras (SWIR), they are capable of
- determining a position and emission direction or a pointing direction of a light beam emitted by a micro-optical component under testing relative to a feature within the micro-optical component, in particular with respect to an alignment marker which may be a reference coupling location;
- accurately capturing a coupling-efficiency to a test mode-field provided by the probe head, in particular the micro-optical element, whereas a SWIR camera can only measure a mode-field of a beam emitted by a micro-optical component under testing and indirectly determining the coupling efficiency to a design mode-field;
- accurately measuring a pointing direction of a light beam emitted by a micro-optical component under testing whereas a SWIR camera is very inaccurate, in particular for large mode-fields, especially since their mode center can hardly be determined.

Further, the optical probe and the related methods can be used for an absolute measurement with respect to an alignment marker which results in a range of advantages compared to not measuring with respect to an alignment marker:
- determining an emission direction, especially an angle, with respect to a micro-optical component under testing;
- determining an emission position with respect to a micro-optical component under testing;
- increased measurement throughput since fewer optimization algorithms can be used;
- no or simplified calibration of the probe heads with respect to at least one micro-optical component under testing by using a different method, such as camera vision;
- decreased risk of a crash of the probe head with the at least one micro-optical component under testing;
- precise knowledge about a placement of optical components, in particular a beam-shaping element, which can be used for process control;
- a kind of testing which is closer to a final application of an optical system, in particular since the probe head can mimic optical components, such as a detachable optical connector or optical elements, and thus allows more a reliable fabrication of detachable optical connectors and co-packaged optics by identifying errors in fabrication steps;
- no need to use external distance or proximity sensors which are, usually, difficult to calibrate for determining a distance to the at least one micro-optical component under testing.

### Short description of the Figures

Further optional features and embodiments of the present invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments. In the Figures:
- Figures 1 and 2: each illustrates an exemplary embodiment of an optical probe configured for determining an emission characteristics of a light beam emitted by of a micro-optical component under testing;
- Figure 3 and 4: each illustrates a further exemplary embodiment of an optical probe configured for determining emission characteristics of a plurality of light beams emitted by a micro-optical component under testing;
- Figure 5: illustrates a further exemplary embodiment of the optical probe configured for determining an emission characteristics of a light beam emitted by of a micro-optical component under testing;
- Figure 6: illustrates various exemplary embodiments of an alignment marker and a probe head; and
- Figures 7 to 9: each illustrates a further exemplary embodiment of the optical probe configured for determining an emission characteristics of a light beam emitted by of a micro-optical component under testing.

### Detailed description of the embodiments

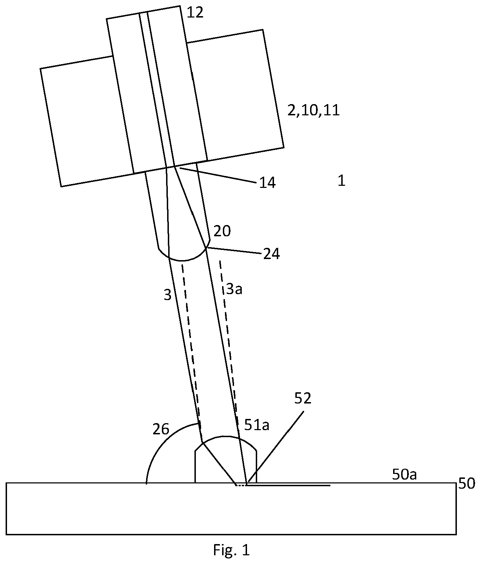

Figure 1 illustrates an exemplary embodiment of an optical probe 1, which is configured for determining an emission characteristics of a light beam 3 emitted by a micro-optical component 50 under testing at a coupling location 52 that is comprised by the micro-optical component 50. In the exemplary embodiment as depicted in Figure 1, the coupling location 52 is implemented by using a grating coupler and a beam-shaping element 51a. The emission characteristics of the light beam 3 emitted by the micro-optical component 50 at the coupling location 52 can be characterized here by measuring a deflection angle 26, which expresses a deviation between a direction of a deviated light beam 3a from an expected direction of the light beam 3 emitted by the micro-optical component 50 at the coupling location 52.

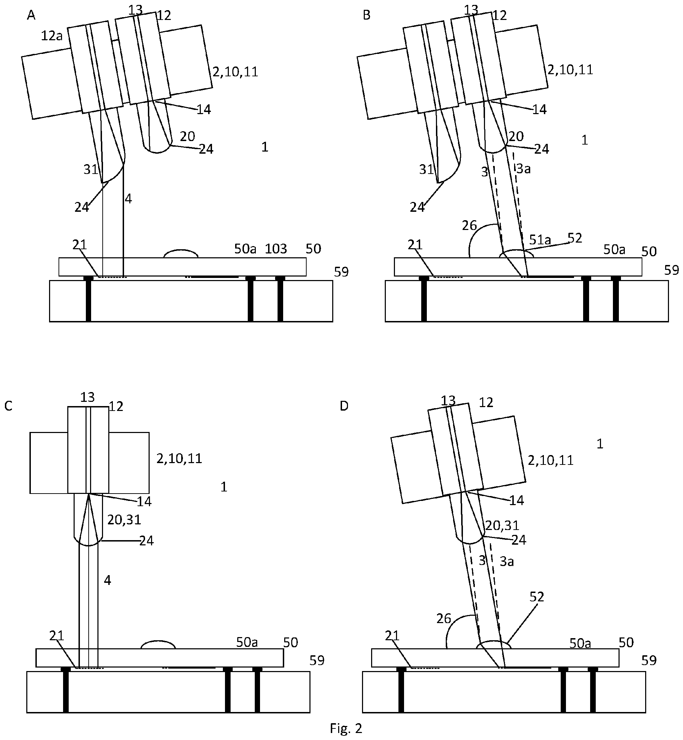

Figure 2 A and B illustrate further exemplary embodiments of the optical probe 1 configured for determining an emission characteristics of a light beam 3 emitted by a micro-optical component 50 under testing at a coupling location 52 comprised by the micro-optical component 50. In the exemplary embodiment as depicted in Figures 2 and 2B, the coupling location 52 is again implemented by using a grating coupler through the beam-shaping element 51a located on the surface 50a of the micro-optical component 50 or a portion thereof. The emission characteristics of the light beam 3 emitted by the micro-optical component 50 at the coupling location 52 can be characterized also here by using the deflection angle 26, which expresses the deviation between the direction of the deviated light beam 3a from the expected direction of the light beam 3 emitted by the micro-optical component 50 at the coupling location 52. The micro-optical component 50 can, again, be rejected if a value of the deflection angle 26 is not within a certain tolerance range.

In order to achieve a position and angular reference for a measurement of the deflection angle 26, a sensor structure 31 is aligned prior to the first measurement to an alignment marker 21, which is comprised by the micro-optical component 50, as depicted in Figure 2A. In this manner, the probe head 10 can be aligned to the micro-optical component 50. For determining the alignment, at least one position signal 4 indicative for a position of the probe head 10 relative to the micro-optical component 50 can be transferred between the alignment marker 21 and the probe head 10. Alternatively or in addition, the position signal 4 can be coupled from the probe head 10 to the micro-optical component 50, or vice versa, or bidirectional. As depicted in Figure 2A, the position signal 4 can be transmitted from an optical fiber 12a, which is comprised by a micro-optical element 20, through the sensor structure 31 to alignment marker 21, from where the position signal 4 may be reflected back into optical fiber 12a. The position and angular reference may be defined as a point of best optical coupling between the optical fiber 12a and the alignment marker 21. As a further embodiment (not depicted here), the reference coupling location 51 may be used as the alignment marker 21.

Subsequently, the probe head 10 can be moved to a pre-determined location as further depicted in Figure 2A. By design, it can be expected that this position is the position of best optical coupling for the light beam 3 from a fiber 12, which is comprised by the probe head 10, to the reference coupling location 51, or vice versa, or bi-directional. If the optical coupling is below a predetermined value or arbitrarily, the probe may be moved into a position of best optical coupling as defined by the deviated light beam 3a. If the emission characteristics between the expected light beam 3 and the deviated light beam 3a is significantly different, a value indicating this difference may be stored in a database, and the micro-optical component 50 may be sorted out and not processed any further. The micro-optical component 50 may also be scraped, if the optical coupling is below a predetermined threshold value.

In order to measure the deviation of the deviated light beam 3a with respect to the expected light beam 3, the test component 2 may be brought to a location, at which best coupling to the light beam 3 is expected per design. The alignment of 50 with respect to 10 can be achieved by a detection of 4. If a first measurement of a position of the probe head 10 relative to the micro-optical component 50 shows that a measured optical coupling may not be sufficiently high or arbitrarily, the test component 2 may be moved in a manner that best optical coupling is achieved, whereinafter at least one second measurement of the emission characteristics of the coupling location 52 is performed. If the deviation between the two measurements is too high, the micro-optical component 50 under testing can be identified as having failed testing specifications.

In a further exemplary embodiments as illustrated in Figures 2C and 2D, the micro-optical element 20 may also serve as the sensor structure 31 configured to detect the alignment marker 21. In this embodiment (not depicted here), the reference coupling location 51 may be used as the alignment marker 21. Alternatively, two reference coupling locations 51 connected to each other and each used as alignment marker 21 may be measured by two different sensor structures 31 in a loop-back configuration. The optical probe 10 may be brought into a position for alignment as depicted in Figure 2C and, subsequently, a further position for measurement as depicted in Figure 2D. The alignment marker 21 may also be designed in a manner that a movement of the probe head 10 between alignment and measurement may be minimized, in particular by locating the alignment marker 21 very close to the coupling location 52, preferably closer than 1 mm, more preferred closer then 250 µm, particularly closer than 100 µm, whereby a faster measurement may be feasible.

As further depicted in Figures 2A to 2 D, the micro-optical component 50 may be attached to an electrical board, such as a printed circuit board (PCB) 59, having at least one of an electrical, optical or electrical functionality, wherein the electrical board may, optionally, comprise at least one waveguide.

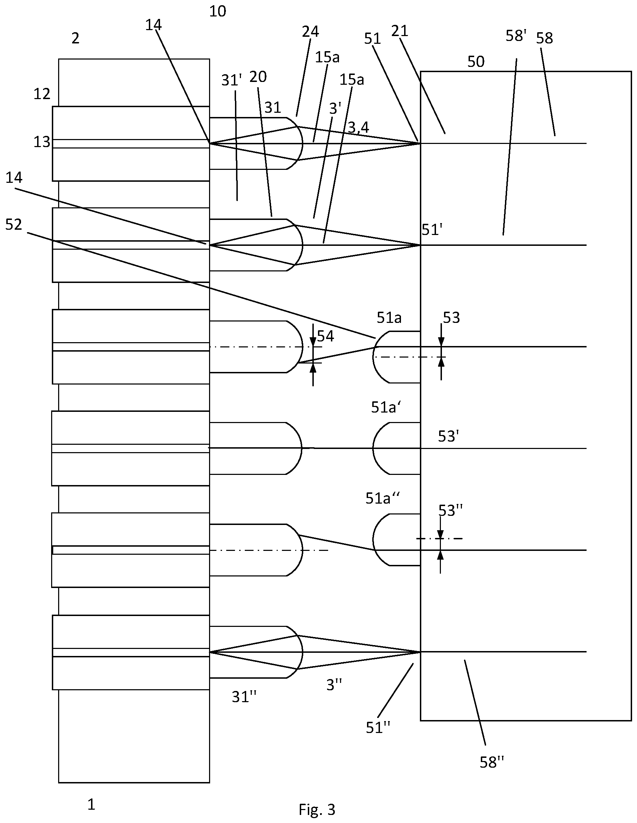

Figure 3 illustrates a further exemplary embodiment of an optical probe 1 configured for determining emission characteristics of a plurality of light beams 3, 3', 3" ... emitted by a micro-optical component 50 under testing. As depicted in Figure 3, a plurality of sensor structures 31, 31', 31" ... use a plurality of reference coupling locations 51, 51', 51" ... connected to a plurality of waveguides 58, 58', 58"... to measure a relative position of the probe head 10 with respect to the micro-optical component 50. This arrangement, particularly, allows determining a defect of a plurality of beam-shaping elements 51a, 51a', 51a" ..., each having a coupling location 52, 52', 52" ..., each of which exhibits an alignment offset 53, 53', 53" ... with respect to the corresponding reference coupling location 51, 51', 51" .... The alignment offset 53, 53', 53" ... can be determined, preferably, by moving the probe head 10 by a distance which corresponds to a measured offset 54 while a signal being indicative for the emission characteristics of the micro-optical component 50 is detected at the same time.

As depicted in Figure 3, the waveguides 58, 58', 58"... are fiber cores. In a preferred embodiment, the beam-shaping elements 51a, 51a', 51a" ... may be or comprise a reflective optics, especially comprising glass, a metal, or a polymer. In particular, the sensor structures 31, 31', 31" ... may comprise a reflective part and redirect the light beams 3, 3', 3" ... substantially under an angle of 60° to 120°, specifically of 90°, thereby coupling the light beams 3, 3', 3" ... into the fiber cores of the waveguides 58, 58', 58"..., which are not equipped with micro-optics and are used for defining a position reference of the probe head 10 with respect to the micro-optical component 50. In a preferred embodiment, at least one of the beam-shaping elements 51a, 51a', 51a" ... may be used as alignment marker 21 configured to determine the relative position of the probe head 10 with respect to the micro-optical component 50. Alternatively or in addition (not depicted here), the micro-optical component 50 may be connected to a fiber plug in a later processing step, a fiber array equipped with micro-optics, a photonic-plug, a metallic optical bench, or a molded polymer micro-optics. However, further embodiments are conceivable.

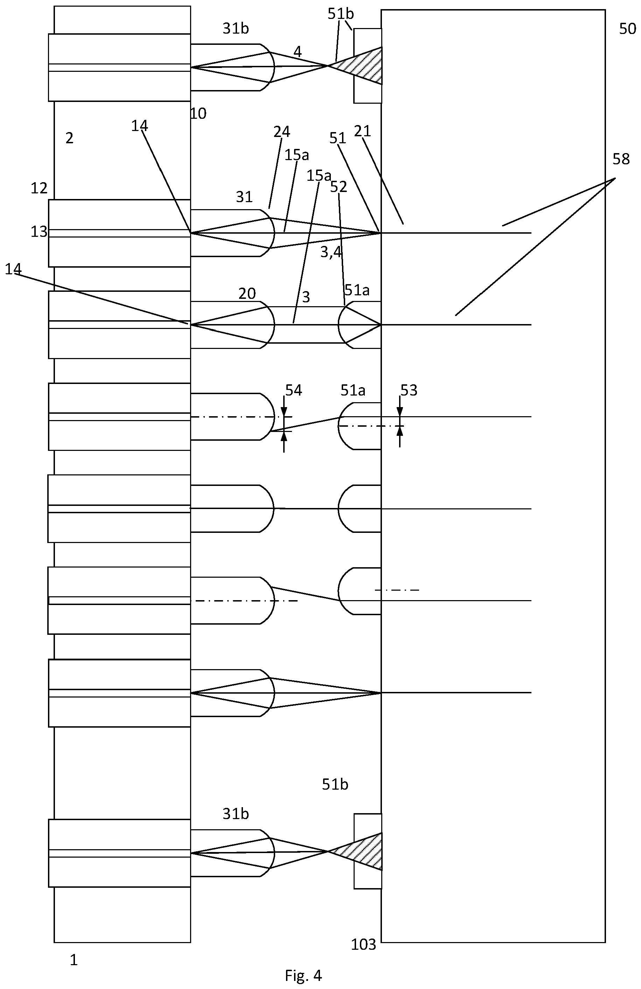

Figure 4 illustrates a further exemplary embodiment of an optical probe 1 configured for determining emission characteristics of a plurality of light beams 3emitted by a micro-optical component 50 under testing. As depicted in Figure 4, the micro-optical component 50 comprises a mechanical alignment structure 51b, which is configured to be aligned with the coupling location 52 and/or the alignment marker 21. The mechanical alignment structure 51b may, especially, be selected from a hole, a pin, or a pump comprised by the micro-optical component 50. Herein, a distance sensor 31b can be configured to detect a position of the mechanical alignment structure 51b and, in a preferred embodiment, it may, simultaneously or consecutively, detect at least one alignment marker 21. For this purpose, the sensor structure 31 or the distance sensor 31b can be used to detect the position of the mechanical alignment structure 51b. In a further embodiment, the distance sensor 31b can, specifically, be configured to detect the mechanical alignment structure 51b. For this purpose, the distance sensor 31b may be configured to detect at least one optical signal indicative for the position of the mechanical alignment structure 51b, wherein the at least one optical signal may be selected from a reflective signal, a white light signal, an interference signal, or a fluorescence signal.

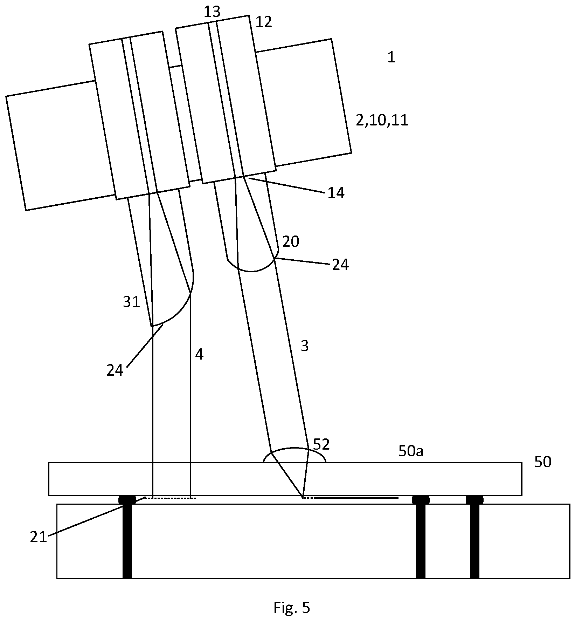

Figure 5 illustrates a further exemplary embodiment of the optical probe 1 configured for determining an emission characteristics of a light beam 3 emitted by a micro-optical component 50 under testing at a coupling location 52 comprised by the micro-optical component 50. In the exemplary embodiment as depicted in Figure 5, the sensor structure 31 is configured in a manner that the position signal 4 can be measured with high intensity or maximum intensity at a position at which the light beam 3 is approximately maximal. This embodiment allows a fast and accurate measurement. In a preferred implementation, the sensor structure 31 may have has an angled surface 24 configured to enable a concurrent measurement of the position signal 4, which is indicative for a position of the probe head 10 relative to the micro-optical component 50, and of the position and orientation of the light beam 3.

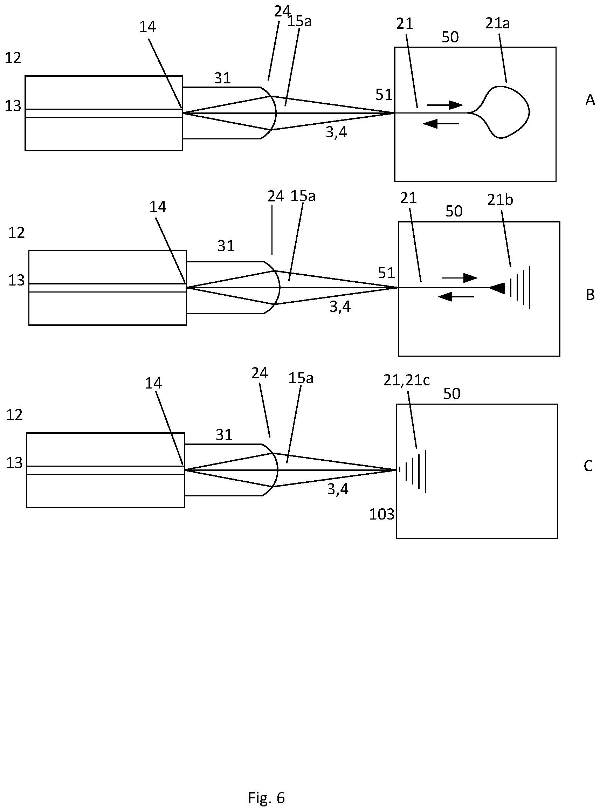

Figures 6A to 6C illustrate various exemplary embodiments of the alignment marker 21 or the probe head 10, respectively.

Figure 6A illustrates an embodiment of the alignment marker 21, which comprises a Sagnac mirror 21a that is configured as an optical reflector.

Figure 6B illustrates a further embodiment of the alignment marker 21, which comprises a grating reflector 21b.

Figure 6C illustrates a further embodiment of the alignment marker 21, which comprises a diffractive structure 21c that is configured to reflect the light beam 3 through a facet 103. Herein, the facet 130 can be the surface 50a of the micro-optical component 50 or a portion thereof. Alternatively or in addition, the facet 130 can be applied to the surface 50a of the micro-optical component 50 or a portion thereof, especially by etching, dicing, milling, or cutting the micro-optical component 50 or the portion thereof in a direction vertical to the surface 50a.

In all embodiments, one or more alignment markers 21 or mechanical alignment structures 51b may be detected by one or more sensor structures 31 configured to determine the position of the probe head 10 relative to the micro-optical component 50 in up to six degrees of freedom. In some embodiments, wavelength dispersive properties of the alignment marker 21 or the mechanical alignment structure 51b can be used in order to facilitate detection.

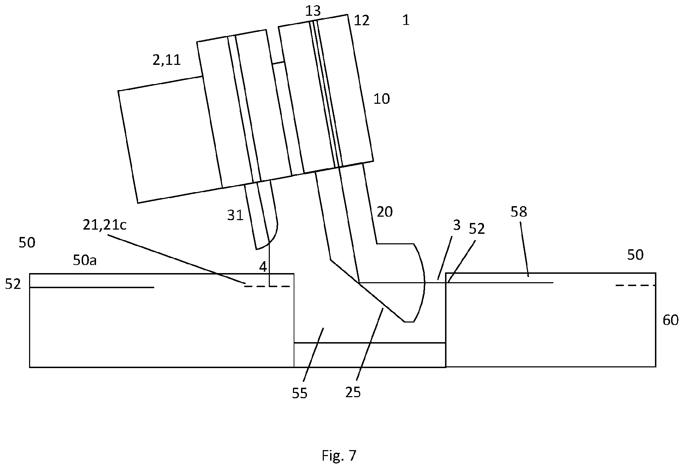

Figure 7 illustrates a further exemplary embodiment of the optical probe 1 configured for determining an emission characteristics of a light beam 3 emitted by a micro-optical component 50 under testing at a coupling location 52 comprised by the micro-optical component 50. As depicted in Figure 7, the sensor structure 31 is configured to detect the alignment marker 21 on the surface 50a of the micro-optical component 50 or a portion thereof, while the micro-optical element 20 couples into a portion of the micro-optical component 50 via an edged facet of a trench 55.

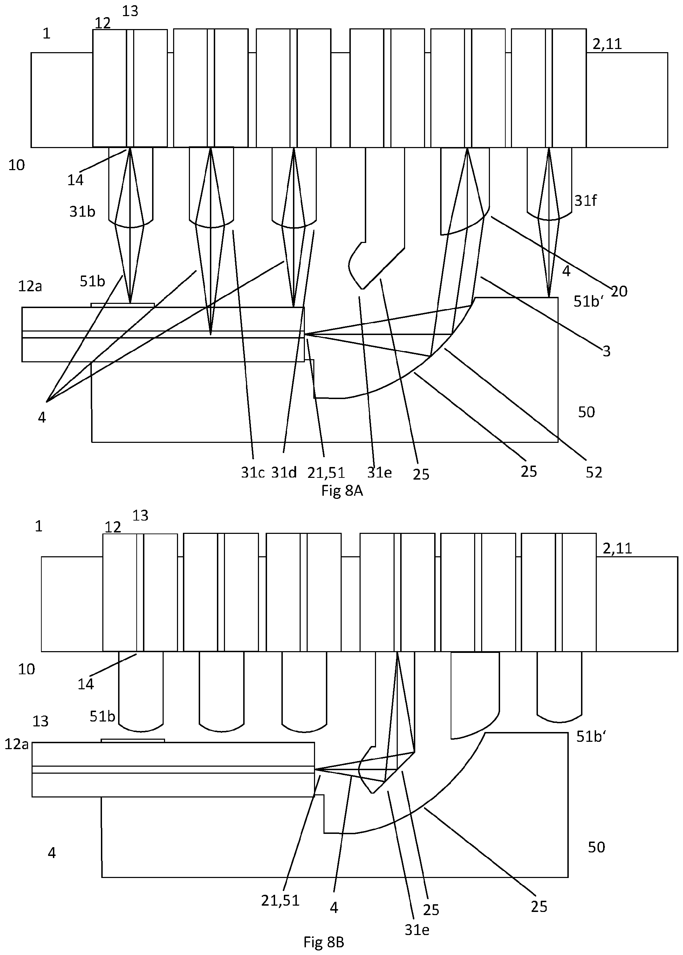

Figures 8A and 8B illustrate a further exemplary embodiment of the optical probe 1 configured for determining an emission characteristics of a light beam 3 emitted by a micro-optical component 50 under testing at a coupling location 52 comprised by the micro-optical component 50. As depicted in Figure 8A, a fiber plug comprising a reflective surface 25 having mechanical alignment structures 51b. Herein, the reflective surface 25 may be an optical mirror, especially selected from a total internal reflection mirror, a metal-coated mirror, or a dielectric-coated mirror; however using a different type of reflective surface may also be feasible. The optical probe 1 couples the light beam 3 from or into an optical fiber 12a as comprised by the micro-optical element 20. In a preferred embodiment, the optical fiber 12a may lead to a photodetector, wherein the photodetector may, preferably, be or comprise an integrating sphere, or wherein a measurement may be performed through a transparent cap or lid on the optical fiber 12a. In a further preferred embodiment, the optical fiber 12a may lead to a reflector and the light beam 3 for the signal and/or the light beam for the position signal 4 may be propagating in or out of the optical fiber 12a. In a further preferred embodiment, an array of optical fibers (not depicted here) may be used, wherein the optical fibers may, preferably, be positioned out or into the drawing plane of Figure 8A.

In particular, the probe head 10 as depicted in Figure 8A may at least comprise one of the following sensor structures:
- a distance sensor 31b or a further sensor structure 31f configured to detect the mechanical alignment structures 51b, 51b' at optionally different location or one location; and/or
- a still further sensor structure 31c configured to detect a central axis of the optical fiber 12a when a focus of the light beam for the position signal 4 emitted by sensor structure 31c is aligned with the core of the optical fiber 12a, wherein the optical fiber 12a may be configured as a retroreflector, whereby the light beam is essentially back-reflected inside or outside the optical fiber 12a and guided back into the optical fiber 12a as the light beam impinges perpendicular onto a surface of the optical fiber 12a; and/or
- an even further sensor structure 31d, which is configured to detect an apex of the optical fiber 12a.

As illustrated in Figure 8B, the probe head 10 may comprise an alternative sensor structure 31e, which may be configured to detect the reference coupling location 51 having a functionality of the alignment marker 21. In this embodiment, the probe head 10 is moved into another position as depicted in Figure 8B.

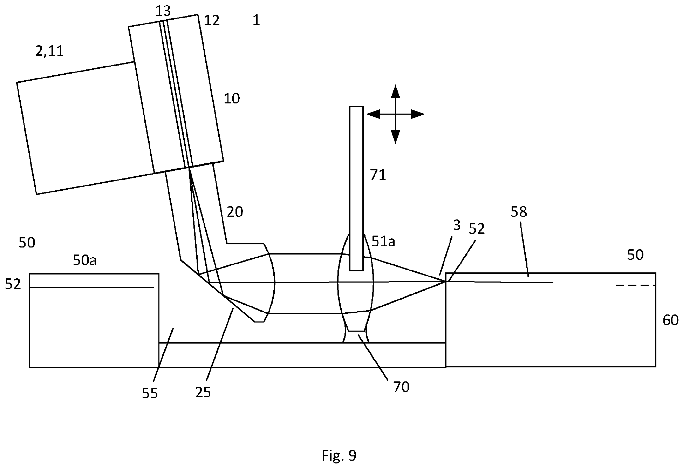

Figure 9 illustrates a further exemplary embodiment of the optical probe 1 configured for determining an emission characteristics of a light beam 3 emitted by a micro-optical component 50 under testing at a coupling location 52 comprised by the micro-optical component 50 and a beam-shaping element 51a. While measuring the light beam 3, the position of the beam-shaping element 51a is optimized in this embodiment by using an actuator 71. When the beam-shaping element 51a is in the correct position, a glue 70 is cured to fix 51a in the right position. Alternatively, a laser bonding process or other process is used to fix the beam-shaping element 51a. The actuator 71 may, preferably, comprise a gripper or a vacuum tool configured to fix the beam-shaping element 51a, which may be an aspheric micro lens as schematically depicted in Figure 9. To determine the correct position of the beam-shaping element 51a, the coupling of the light beam 3 may be maximized. To position the optical probe 1 at a pre-defined position, the same or a similar sensor structure 31 as shown in Figure 7 may, preferably, be used. In a preferred embodiment, the optical probe 1 may be placed at a location at which in another step an optical connector or an optical plug may be placed and the optical probe 1 may mimic the optical coupling to the optical plug. In a further preferred embodiment, the sensor structure 31 may be configured to detect a mechanical alignment structure 51b, which is configured is used to align the optical plug or the connector to the micro-optical component 50 in a later step. As schematically depicted in Figure 9, the beam-shaping element 51a is fixed in a trench 55 of a wafer 60. In an alternative embodiment (not depicted here), the beam-shaping element 51a may be fixed on a carrier which may, preferably, comprise a material having a low thermal expansion coefficient, especially selected from at least one of Si, AlN, or CuW; however using a different material having a low thermal expansion coefficient may also be feasible.

### List of Reference Signs

- 1: Optical probe
- 2: Test component
- 3: Light beam between micro-optical component and test component
- 3a: Deviated light beam between micro-optical component and test component
- 4: Position signal
- 10: Probe head
- 11: Fiber array
- 12: Optical fiber, comprised by probe head
- 12a: Optical fiber, comprised by micro-optical element
- 13: Fiber core
- 13a: Main fiber core
- 13b: Error signal fiber core
- 14: Coupling location of test component
- 15a: Optical axis of sensor structure
- 15b: Optical axis of micro-optical element
- 20: Micro-optical element
- 21: Alignment marker, part of micro-optical component
- 21a: Sagnac reflector
- 21b: Grating reflector
- 21c: Diffractive structure
- 21d: Diffractive structure having a different polarization or wavelength response
- 24: Refractive surface, e.g. optical lens or prism
- 25: Reflective surface
- 26: Deflection angle
- 31: Sensor structure
- 31a: Position sensitive device
- 31b: Sensor structure configured to measure mechanical surface (distance sensor)
- 31c: Sensor structure configured to measure center of optical fiber
- 31d: Sensor structure configured to measure apex of optical fiber
- 31e: Sensor structure configured to measure coupling location as alignment marker
- 31f: Sensor structure configured to measure mechanical surface at second location
- 50: Micro-optical component
- 50a: Surface of micro-optical component or portion thereof
- 51: Reference coupling location at micro-optical component configured to be used in determining position of probe head relative to micro-optical component
- 51a: Beam-shaping element
- 51b: Mechanical alignment structure
- 52: Coupling location at micro-optical component configured to be used in determining emission characteristics of micro-optical component
- 53: Alignment offset
- 53a: Alignment offset of sensor structure to alignment marker
- 54: Measured offset
- 54a: Measured offset of sensor structure to alignment marker
- 55: Trench etched into wafer
- 58: Waveguide, part of micro-optical component
- 59: Printed circuit board (PCB)
- 60: Wafer
- 70: Glue
- 71: Actuator
- 103: Facet of micro-optical component

## Claims

1. An optical probe (1) configured for optical testing of at least one micro-optical component (50), comprising,
- a probe head (10), wherein the probe head (10) comprises a test component (2);
- at least one micro-optical element (20), wherein the micro-optical element (20) is a separate element with regard to the test component (2) and in mechanical contact with the test component (2),
wherein the micro-optical element (20) is configured to optically couple at least one light beam (3) between the test component (2) and the micro-optical component (50), thereby being configured to determine an emission characteristics of a coupling location (52) comprised by the micro-optical component (50), wherein the micro-optical component (50) further comprises a beam-shaping element (51a), wherein the beam-shaping element (51a) is arranged in a manner that at least a portion of the light beam (3) is travelling through the beam-shaping element (51a).

2. The optical probe (1) according to the preceding claim, wherein the probe head (10) is configured to detect a deviation of the light beam (3) travelling through the beam-shaping element (51a) by at least one first measurement of a position of the probe head (10) relative to the micro-optical component (50) and at least one second measurement of the emission characteristics of the coupling location (52).

3. The optical probe (1) according to any one of the preceding claims, wherein the beam-shaping element (51a) is in mechanical contact with the micro-optical component (50).

4. The optical probe (1) according to any one of the preceding claims, further comprising:
- at least one sensor structure (31), wherein each sensor structure (31) is configured to determine the position of the probe head (10) relative to the micro-optical component (50) by detecting at least one corresponding alignment marker (21) on a surface of micro-optical component (50) or a portion thereof being detectable by the sensor structure (31).

5. The optical probe (1) according to the preceding claim, wherein the sensor structure (31) is further configured to detect a reference coupling location (51) comprised by the micro-optical component (50), wherein the reference coupling location (51) is configured to provide a position reference of the position of the probe head (10) relative to the micro-optical component (50), wherein the position reference is configured to determine the emission characteristics of the coupling location (52).

6. The optical probe (1) according to any one of the two preceding claims, wherein the alignment marker (21) is configured to be used in determining the position of the probe head (10) relative to the coupling location (52) on a surface (50a) of the micro-optical component (50) or the portion thereof.

7. The optical probe (1) according to the preceding claim, further comprising:
- a distance sensor (31b), wherein the distance sensor (31b) is configured to determine the position of the probe head (10) relative to the coupling location (52) out of the surface (50a) of the micro-optical component (50) or the portion thereof.

8. The optical probe (1) according to any one of the preceding claims, wherein the coupling location (52) is comprised by a detachable optical connector.

9. A method for producing an optical probe (1) configured for optical testing of at least one micro-optical component (50), in particular the optical probe (1) according to any one of the preceding claims referring to the optical probe (1), the method comprising the following steps:
(i) providing a probe head (10), wherein the probe head (10) comprises a test component (2); and
(ii) generating at least one micro-optical element (20) and at least a sensor structure (31) by using a direct-write process, wherein each of the micro-optical element (20) and the sensor structure (31) is being generated as separate element with regard to the test component (2) and in mechanical contact with the test component (2),
wherein the micro-optical element (20) is configured to optically couple at least one light beam (3) between the test component (2) and a micro-optical component (50), thereby being configured to determine an emission characteristics of a coupling location (52) comprised by the micro-optical component (50), wherein the micro-optical component (50) further comprises a beam-shaping element (51a), wherein the beam-shaping element (51a) is arranged in a manner that at least a portion of the light beam (3) is travelling through the beam-shaping element (51a).

10. The method according to the preceding claim, wherein at least one of the micro-optical element (20) or a sensor structure (31), which is configured to determine the position of the probe head (10) relative to the micro-optical component (50), is produced by using additive manufacturing.

11. A method for optical testing of at least one micro-optical component (50), the method comprising the following steps:
a) providing an optical probe (1), wherein the optical probe (1) comprises a probe head (10) and at least one micro-optical element (20), wherein the probe head (10) comprises a test component (2), wherein the micro-optical element (20) is a separate element with regard to the test component (2) and in mechanical contact with the test component (2);
b) positioning the probe head (10) in a manner that the micro-optical element (20) optically couples at least one light beam (3) between the test component (2) and the micro-optical component (50), wherein the micro-optical component (50) comprises a beam-shaping element (51a), wherein at least a portion of the light beam (3) is travelling through the beam-shaping element (51a); and
c) determining an emission characteristics of a coupling location (52) comprised by the micro-optical component (50).

12. The method according to the preceding claim, wherein the beam-shaping element (51a) is aligned to the micro-optical component (50) by using the emission characteristics of the coupling location (52).

13. The method according to any one of the two preceding claims, wherein at least two consecutive measurements of the position of the probe head (10) relative to the micro-optical component (50) are performed, wherein each measurement comprises the probe head (10) measuring the at least one position signal (4) indicative for the position of the probe head (10) relative to the micro-optical component (50), whereby a deviation of the light beam (3) travelling through the beam-shaping element (51a) is detected.

14. The method according to any one of the three preceding claims, wherein the position of the probe head (10) relative to the micro-optical component (50) is measured separately from determining the emission characteristics of the coupling location (52), wherein the position of the probe head (10) relative to the micro-optical component (50) is measured by detecting a corresponding alignment marker (21) on a surface of micro-optical component (50) or a portion thereof.

15. The method according to any one of the four preceding claims, wherein the probe head (10) faces the micro-optical component (50) at a first side of the micro-optical component (50), and wherein the alignment marker (21) is located at a second side of the micro-optical component (50), wherein the second side is located opposite to the first side of the micro-optical component (50).
